# EUROPEAN PATENT APPLICATION

(11) **EP 3 954 565 A1**
(43) Date of publication of application: **16.02.2022**
(21) Application number: 20190915.7
(22) Date of filing: 13.08.2020
(51) Int. Cl.: B60K 11/08, B60R 19/48

(54) **VEHICLE FRONT END COMPRISING A VEHICLE FRONT END ELEMENT WITH AT LEAST ONE OPENING LEADING TO AN AIR DUCT DEVICE BEING POSITIONED DOWNSTREAM SAID OPENING AND METHOD OF MANUFACTURING AN AIR DUCT DEVICE FOR A VEHICLE FRONT END**

(71) Applicant: Volkswagen Aktiengesellschaft, 38440 Wolfsburg (DE); SAIC Volkswagen Automotive Co. Ltd., Shanghai 201805 (CN)
(72) Inventor: Ippoliti, Mario, 38444 Wolfsburg (DE); Tang, Hongyun, Shanghai City, 201801 (CN); Giu, Minghao, Shanghai City, 201802 (CN); Schulz, Reiner, 38446 Wolfsburg (DE); Zacharias, Norman, 38489 Jübar (DE)
(74) Representative: Freischem & Partner Patentanwälte mbB

(57) **Abstract**

The invention relates to a vehicle front end (50) with at least one vehicle front end element (10) with at least one opening (16) leading to an air duct device (18) being positioned downstream said opening (16) and to a method of manufacturing an air duct device (18) for such a vehicle front end element (10). The object of the invention is to provide a vehicle front end element (10) with an opening (16) leading to an air duct device (18) and a method of producing an air duct device (18) for a vehicle front end element (10) causing low production costs and but keeping the assembly costs low. A vehicle front end element (10) according to the invention comprises at least one opening (16) leading to an air duct device (18) being positioned downstream said opening (16), wherein the air duct device (18) provides a surrounding channel (22) and wherein the air duct device (18) is formed by at least two segments (24, 26) being connected by an integral hinge (28).

## Description

The invention relates to a vehicle front end comprising a vehicle front end element with an opening leading to an air duct device being positioned downstream said opening and to a method of manufacturing an air duct device for a vehicle front end, in particular for a vehicle front end element with an opening as mentioned above. The invention relates in particular to vehicle front ends for motor vehicles such as cars or motor trucks, in particular with combustion or engines, with electric engines and/or with other power trains including hybrid power trains. It is explicitly referred to motor vehicles comprising a front bumper cover as a vehicle front end element, said front bumper cover comprising at least one opening, preferably two openings or more openings, said opening(s) leading air through an air duct device to front wheel houses. Such an air duct device is also referred to as air curtain.

DE 10 2010 037 616 A1 discloses an air-guiding element device for a motor vehicle being attached to the underbody in front of the front wheels of the motor vehicle. The air-guiding element device comprises at least one air-guiding element being arranged vertically to the road surface and in an angle to lead air around the wheel. It is also referred to a movable embodiment of an air guiding element being attached to the underbody by a joint of by an integral hinge allowing the air guiding element to change the angle dependent from the wind pressure.

The object of the invention is to provide a vehicle front end comprising a vehicle front end element with an opening leading to an air duct device and a method of producing an air duct device for a vehicle front end causing low production costs and keeping the assembly costs low.

The object is solved by the features of the independent claims. Further useful embodiments and advantages of the invention are described in connection with the dependent claims.

A vehicle front end according to the invention comprises at least one vehicle front end element with at least one opening leading to an air duct device being positioned downstream said opening, wherein the air duct device provides a surrounding channel and wherein the air duct device is formed by at least two segments being connected by an integral hinge. Preferably, the integral hinge is oriented parallel to one of the main directions of the air duct device, such as the length, the width or the height of the air duct device. If the air duct device has the form of a cuboid, such directions are preferably understood based on the airflow direction, e.g. the length is to be understood as to be parallel to the airflow direction, the width is to be understood to be transverse, in particular orthogonal, to the airflow direction and the height is to be understood to be orthogonal to the width and the length.

A surrounding channel means that the channel extends, regarded in circumferential direction, at least at a certain longitudinal section of the air duct device to the whole circumference. In this regard, circumference is not restricted to a circumference of a circle, but refers to all kind of cross-sectional shapes, in particular to prismatic cross-sectional shapes, such as rectangular cross-sectional shapes or other foursquare or polygonal cross-sectional shapes.

The air duct device of a vehicle front end according to the invention has the advantage that the integral hinge may be used to form the air duct device by one piece with two (or more) segments, wherein said segments are brought in a position one to each other forming an air duct device with a surrounding channel. The fact that the air duct device may be produced in one piece keeps the production costs low, in particular if said device is a molded part and thus requires a mold. Furthermore, the assembly of the air duct device is simple, because it is sufficient to swivel the segments around the integral hinge and to fix said elements when forming a channel. The integral hinge ensures an appropriate relative position between the two segments when said segments contact each other in order to form a channel. Thus, it is not necessary to coordinate the availability and/or movement of two or more separate parts. Furthermore it is sufficient to connect the segments only at one single connection section, in particular a connection line.

The air duct device may, in particular, be attached to a vehicle front end element with the opening as mentioned above. Alternatively or additionally, the air duct device may be connected to any other vehicle front end element, in particular to those front end elements being positioned adjacent to the air duct device and/or directly or indirectly connected to the vehicle front end element with the mentioned opening.

In a preferred embodiment of the invention, the air duct device of the vehicle front end is made of plastic material. In particular, the air duct device is manufactured in one piece, for example as an injection molding part. In particular it is referred to thermoplastic material and to thermosetting material.

In a further preferred embodiment the wall thickness of the air duct device of a vehicle front end according to the invention is at least in the predominant sections of the surrounding channel in the range of 1.5 mm to 4 mm, particularly preferred 2.0 mm to 3.0 mm.

Alternatively or additionally, the wall thickness of the integral hinge is in the range of 0.6 mm to 1.5 mm, preferably in the range of 0.7 mm to 1.2 mm and most preferred in the range of 0.8 mm to 1.0 mm.

The wall thicknesses as mentioned above provide the option of efficient manufacturing combined with a long-lasting and high quality product, in particular if the air duct device is manufactured from plastic material.

The invention has further manufacturing and assembling advantages, if the air duct device comprises at least one connection structure allowing to fix the at least two segments in the channel position. In this case, the air duct device itself provides means to fix the at least two segments after having brought them into the channel position.

Preferably, the at least one connection structure comprises one or more clip elements with one or more corresponding clip receptions. Such clip element and clip reception may be part of a one piece air duct device, in particular a one peace air duct device made as an injection molding part and/or made from plastic material.

In a further preferred embodiment, the at least one air duct device of the vehicle front end according to the invention extends predominantly from an air opening being positioned at a front position in the vehicle front end element and being oriented forward in relation to the driving direction of the vehicle to a rear position in the vehicle front end element thus allowing air to flow longitudinally through the vehicle front end element. In this case, the vehicle front end element may simply comprise a front design with at least one (air) opening, such as a body shell part of a front bumper cover with an opening, and a longitudinal extent, i.e. an extent in the longitudinal direction of the vehicle. The air duct device, being appropriately attached such that a channel front opening is positioned downstream the at least one opening, provides a channel for air flowing from the at least one opening through the channel to an outlet opening of the channel at a rear position in the vehicle front end element.

In the context as mentioned above, predominantly means that the channel extends at least above at least 50 percent, preferably above 70 percent or 80 percent and most preferably above more than 90 percent or 100 percent of the vehicle front end element's longitudinal extent.

The invention was made in particular for vehicle front end elements, wherein the at least one opening is part of a front bumper cover or an air inlet grill (also including a radiator grill) and wherein the air duct device leads to a front wheel house, in particular to a front position of a front wheel house. As mentioned above, such air duct devices are also referred to as air curtain. Preferably, such vehicle front end elements comprise two openings, wherein each opening leads to a channel leading to a front wheel house. It is also referred to two or more openings in combination with one or several vehicle air duct devices.

A vehicle front end according to the invention may have further advantages, if the air duct device comprises a front bearing surface and/or a rear bearing surface, said front bearing surface and/or said rear bearing surface being oriented transverse to the airflow direction through the channel. In this case, the assembly may be arranged by bringing the air duct device in a relative position to the vehicle front end element where the front bearing surface abuts against a front bearing surface and/or the rear bearing surface abuts against a rear part of the vehicle front end element.

The invention also refers to a method of manufacturing an air duct device for a vehicle front end, in particular to a method of manufacturing an air duct device for a vehicle front end element as described above or below, said air duct device having two segments being connected by an integral hinge, wherein the air duct device is produced, in a first process step, in an elongated position of said air duct device and wherein, in a second process step, the two segments are swiveled around the integral hinge in a manner to form a surrounding channel. Elongated position means that integral hinge is used to bring the air duct device brought in a position, where the maximum length and/or the maximum width is reached. In said elongated position the production process requires a minimum of costs for preparing and using a mold, in particular if the air duct device is produced by injection molding. Thus, the method as outlined above allows a cheap production of an air duct device as described above as a one part element. Furthermore, the integrated hinge allows an improved assembly, in particular a predetermined relative position of the two segments when brought to a channel position as described above.

In a further preferred method of the invention the air duct device is made from plastic material and/or the air duct device comprises at least one connection structure, wherein the connection structure is used in or after the second process step to fix the at least two segments in the channel position. It is referred to the advantages in relation the plastic material as described above.

Further useful embodiments of the invention are described in the following in connection with the figures.

It shows:
- Fig. 1: a cutout of a vehicle front end with a front end part according to the invention being realized a front bumper cover in perspective front view,
- Fig. 2: the cutout marked with II in fig. 1 in a perspective rear view, wherein the air duct device is in an elongated position,
- Fig. 3: the cutout marked with II in fig. 1 in a perspective rear view, wherein the air duct device is in a channel position,
- Fig. 4: an enlarged view with further details of the air duct device as shown in fig. 2 from the back side and
- Fig. 5: an enlarged view with further details of the air duct device as shown in fig. 2 from the front side as shown in fig. 2.

In the figures and in the following the X-direction (referring to the arrow X) means the longitudinal direction of a vehicle, the Y-direction (referring to the arrow Y) means the transverse direction of a vehicle and the Z-direction (referring to the arrow Z) means the vertical direction of a vehicle (not shown).

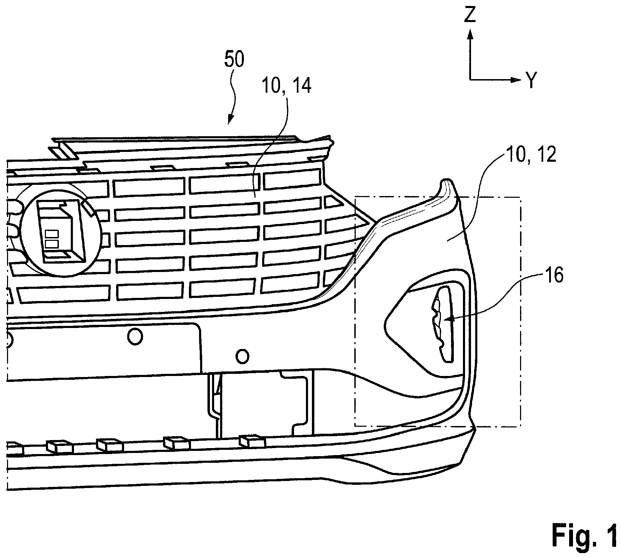

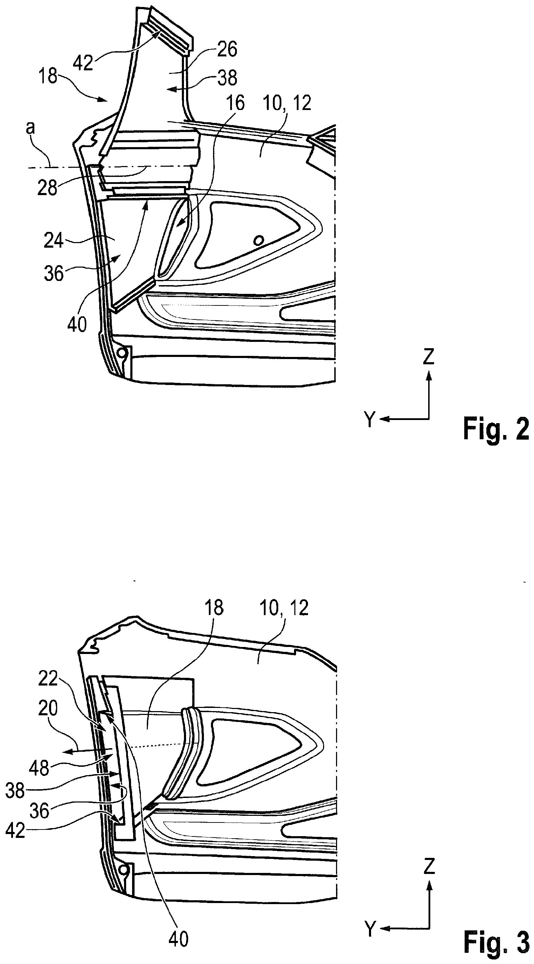

Figure 1 shows a cutout of a left side (in a vehicle driver's view) from a vehicle front end 50 with a front bumper cover 12 and a radiator grill 14. The front bumper cover 12 comprises an opening 16 leading to an air duct device 18 as shown in figures 2 to 5.

On the right side of the vehicle front end 50, the front bumper cover 12 comprises another symmetric opening (not shown), said opening also leading to an air duct device (not shown).

In the following it is only referred to the left side of the vehicle front end 50 and the corresponding opening 16 allowing air to flow, as shown by the airflow arrow 20 in figure 3, through the front bumper cover 12, wherein the air is guided through a channel 22 formed by the air duct device 18. Downstream the opening 16 air directly enters the air duct device 18. The channel 22 of the air duct device 18 leads to a rear opening 48 at a rear position of the front bumper cover 12. Air flowing leaving the channel 22 through the rear opening 48 as shown by the airflow arrow 20 flows into a front wheel house (not shown) of the vehicle (not shown).

As shown in figures 2, 4 and 5 the exemplary air duct device 18 according to the invention is manufactured as a one piece part, namely an injection molding part. It is preferably made from plastic material. The air duct device 18 comprises a first segment 24 and a second segment 26, said segments 24, 26 being connected by an integral hinge 28. The integral hinge 28 is formed as a hinge providing a hinge axis (a) and allowing a relative movement of the mentioned segments 24, 26 around the hinge axis (a). In the exemplary embodiment, the integral hinge 28 is oriented parallel to the length of the air duct device 18 and parallel to the airflow direction.

In the example as shown, the wall thickness of the segments 24, 26 is in the range of 2.0 mm to 3.0 mm, in particular 2.5 mm. The wall thickness of the integral hinge 28 is in the range of 0.8 to 1.0 mm, in particular 0.9 mm.

While figures 2, 4 and 5 show the air duct device 18 in an elongated position, as it is manufactured by injection molding, figure 3 shows the air duct device 18 in an assembled position. The assembled position may be produced before connecting the air duct device 18 to the vehicle front end element 10, in this case the front bumper cover 12 (not shown). Alternatively, the assembled position may be produced after the air duct device 18 was connected to the front bumper cover 12, as shown in figure 2.

In order to produce the assembled position of the air duct device 18, a relative movement of the segments 24, 26 by swiveling said segments 24, 26 around the hinge axis (a) is required.

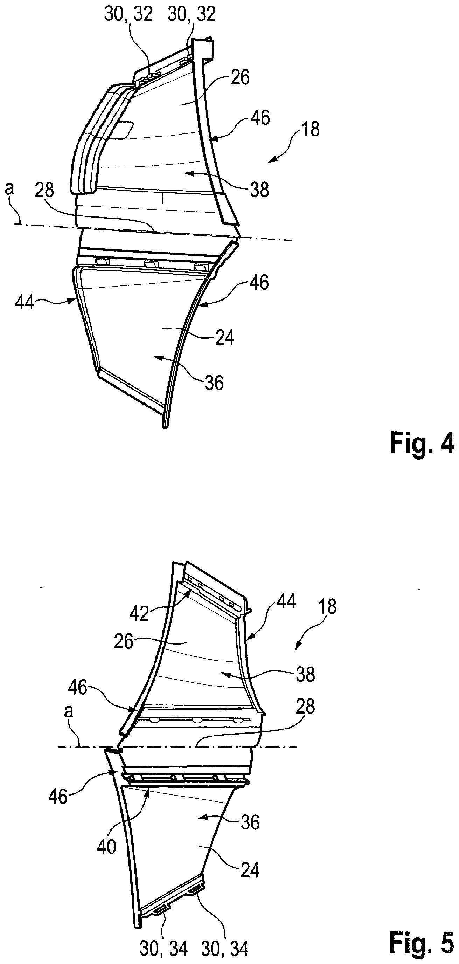

As shown in figures 4 and 5, the air duct device 18 comprises connection structures 30 in the form of clip elements 32 and clip receptions 34. Said connection structures 30 are positioned in a manner allowing that after putting the segments 24, 26 in the assembled position as shown in figure 3, each clip element 32 is mechanically connected with a corresponding clip reception 34, thereby fixing the segments 24, 26 in a channel position as shown in figure 3.

In the embodiment as shown in the figures, each segment 24, 26 has an L-shaped cross section with a vertically extending main wall 36, 38 and a transversely extending transverse wall 40, 42.

Furthermore, the segments 24, 26 comprise front bearing surfaces 44 and rear bearing surfaces 46, said bearing surfaces 44 extending in a direction transverse to the main walls 36, 38 and transverse to the transverse walls 40, 42.

In an assembled position, as shown in figure 3, the air duct device 18 extends in a longitudinal and a transverse direction.

The features of the invention disclosed in the present specification, in the drawings, as well as in the claims may be essential both individually and in any combinations for the realization of the invention in its various embodiments. The invention is not limited to the described embodiments. They can be varied within the scope of the claims and taking into account the knowledge of the competent expert.

### Reference numbers

- 10: vehicle front end element
- 12: front bumper cover
- 14: radiator grill / air inlet grill
- 16: opening
- 18: air duct device
- 20: airflow arrow
- 22: channel
- 24: (first) segment
- 26: (second) segment
- 28: integral hinge
- 30: connection structure
- 32: clip element
- 34: clip reception
- 36: main wall
- 38: main wall
- 40: transverse wall
- 42: transverse wall
- 44: front bearing surface
- 46: rear bearing surface
- 48: rear opening
- 50: vehicle front end

- a: hinge axis

## Claims

1. Vehicle front end comprising at least one vehicle front end element (10) with at least one opening (16) leading to an air duct device (18) being positioned downstream said opening (16), wherein the air duct device (18) provides a surrounding channel (22) and wherein the air duct device (18) is formed by at least two segments (24, 26) being connected by an integral hinge (28).

2. Vehicle front end according to the preceding claim, **characterized in that** the air duct device (18) is made of plastic material.

3. Vehicle front end according to one of the preceding claims, **characterized in that** the wall thickness of the air duct device (18) is at least in the predominant sections of the surrounding channel (22) in the range of 1.5 mm to 4.0 mm and/or the wall thickness of the integral hinge (28) is in the range of 0.6 mm to 1.5 mm.

4. Vehicle front end according to one of the preceding claims, **characterized in that** the air duct device (18) comprises at least one connection structure (30) allowing to fix the at least two segments (24, 26) in the channel position.

5. Vehicle front end according to the preceding claim, **characterized in that** the at least one connection structure (30) comprises one or more clip elements (32) with one or more corresponding clip receptions (34).

6. Vehicle front end according to one of the preceding claims, **characterized in that** the at least one air duct device (18) extends predominantly from an air opening (16) being positioned at a front position in the vehicle front end element (10) and being oriented forward in relation to the driving direction of the vehicle to a rear position in the vehicle front end element (10) thus allowing air to flow longitudinally through the vehicle front end element (10).

7. Vehicle front end according to one of the preceding claims, **characterized in that** the at least one opening (16) is part of a front bumper cover (12) or an air inlet grill (14) and the air duct device (18) leads to a front wheel house.

8. Vehicle front end according to one of the preceding claims, **characterized in that** the air duct device (18) comprises a front bearing surface (44) and/or a rear bearing surface (46), said front bearing surface (44) and/or said rear bearing (46) surface being oriented transverse to the airflow direction through the channel (22).

9. Method of manufacturing an air duct device (18) for a vehicle front end (50) with two segments (24, 26) being connected by an integral hinge (28), wherein the air duct device (18) is produced in a first process step in an elongated position of said air duct device (18) and wherein, in a second process step, the two segments (24, 26) are swiveled around the integral hinge (28) in a manner to form a surrounding channel (22).

10. Method according to the preceding claim, **characterized in that** the air duct device (18) is made from plastic material and/or the air duct device (18) comprises at least one connection structure (30), wherein the connection structure (30) is used in or after the second process step to fix the at least two segments (24, 26) in the channel position.
